# EUROPEAN PATENT APPLICATION

(11) **EP 1 605 371 A1**
(43) Date of publication of application: **14.12.2005**
(21) Application number: 05012689.5
(22) Date of filing: 13.06.2005
(51) Int. Cl.: G06F 17/30

(54) **Content search in complex language, such as japanese**

(30) Priority: 12.06.2004 US 579130 P; 25.06.2004 US 582759 P; 17.09.2004 US 610741 P; 08.06.2005 US 110641 P
(71) Applicant: Getty Images, Inc., Seattle, WA 98103 (US)
(72) Inventor: MacGuffie, Monika, Seattle, WA 98177 (US); Carothers, David, Seattle, WA 98177 (US); Bjarnestam, Anna, 73790 Angelsberg (SE)
(74) Representative: Grünecker, Kinkeldey, Stockmair & Schwanhäusser Anwaltssozietät

(57) **Abstract**

A search facility provides searching capabilities in languages such as Japanese. The facility may use a vocabulary knowledge base organized by concepts. For example, each concept may be associated with at least one keyword (as well as any synonyms or variant forms) by applying one or more rules that relate to identifying common main forms, script variants, alternative grammatical forms, phonetic variants, proper noun variants, numerical variants, scientific name, cultural relevance, etc. The contents of the vocabulary knowledge base are then used in executing search queries. A user may enter a search query in which keywords (or synonyms associated with those key words) may be identified, along with various stopwords that facilitate segmentation of the search query and other actions. Execution of the search query may result in a list of assets or similar indications being retumed, which relate to concepts identified within the search query.

## Description

### CROSS-REFERENCE TO RELATED APPLICATIONS

This application claims priority to the following commonly owned provisional applications: U.S. Provisional Application No. 60/579,130, filed June 12, 2004, entitled "Content Search in Complex Language, Such as Japanese," U.S. Provisional Application No. 60/582,759, filed June 25, 2004, entitled "Cross Orthographic Search and Disambiguation in Japanese - a Solution," and U.S. Provisional Application No. 60/610,741, filed September 17, 2004, entitled "Localizing Concepts for Search Retrieval." The above-referenced applications are herein incorporated by reference.

### BACKGROUND

Computer-implemented searching may be performed in many languages, and is a useful tool that has many applications. Some languages, such as English, are more conducive to searching because of the way that they are structured and organized. Other languages, such as Japanese have not been conducive for structured, organized computer-implemented searching.

Written Japanese is complex and inherently ambiguous for many reasons. Writing or typing Japanese typically involves the use of a combination of three orthographic scripts - kanji, katakana, and hiragana. For example, a single word may contain a combination of two scripts, while a single phrase may contain a combination of all three scripts. Writers of Japanese may also use the Latin alphabet in a form called romaji or romanization, allowing for even more variations. In addition, both Japanese and Arabic numerals may be used to represent numbers, resulting in even more variations. Thus, complexities arise because a given semantic concept can be written using multiple orthographic (written) forms. Likewise, a given orthographic form can have multiple meanings, depending on the pronunciation (or contextual reading) of the written form. In other words, such orthographic forms are inherently ambiguous, and can only be disambiguated based on how the written form is pronounced or read.

As a result of these complexities and ambiguities inherent in the Japanese language, developers have struggled to implement text-based search tools for the Japanese language (e.g., in the context of computerized information). While some existing search tools, including the Goo search engine (www.goo.ne.jp), have Japanese language searching capabilities, at best, these tools are based on simple text pattern matching and are not based on any intelligence by the system about either the semantics of a given expression or its orthography (i.e., the fact that a given written expression can be written in numerous ways).

### BRIEF DESCRIPTION OF THE DRAWINGS

Figure 1 is a block diagram showing a representative environment in which a complex language search facility may be implemented in some embodiments.

Figures 2A-2E are data diagrams showing examples of applying rules to create the vocabulary knowledge base of Figure 1.

Figure 3 is a flow diagram showing an overview of various processes performed by the facility in some embodiments.

Figure 4 is a flow diagram showing processes performed by various components of the facility, such as within the representative environment of Figure 1.

Figure 5 is a flow diagram showing a segmentation routine of one embodiment.

Figures 6-8 provide specific examples of processes associated with the segmentation routine of Figure 5.

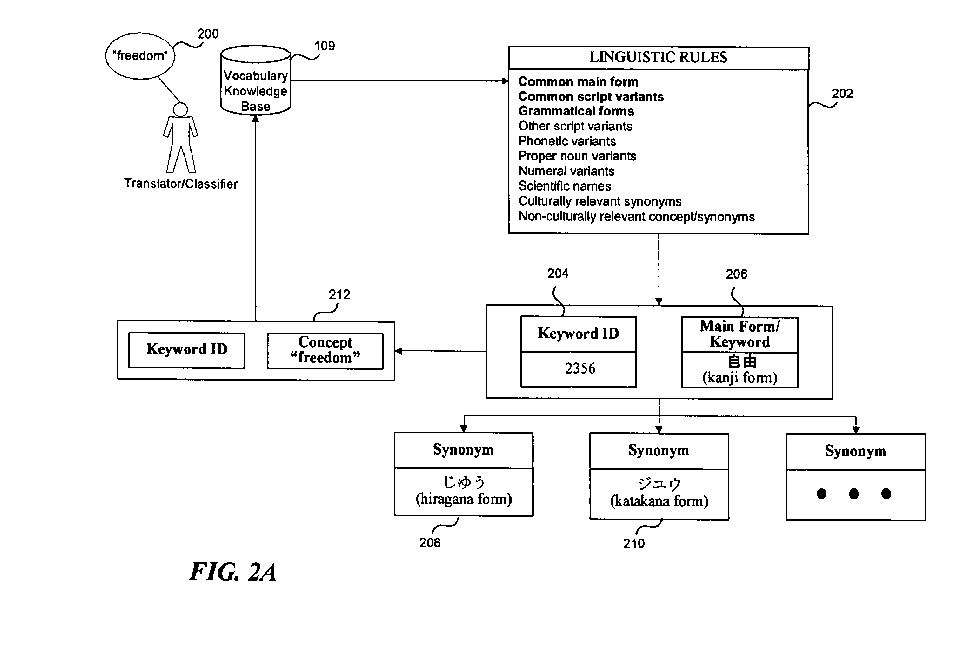

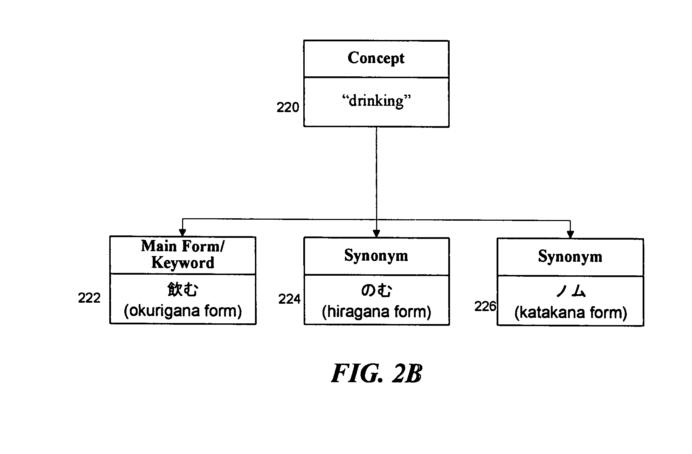

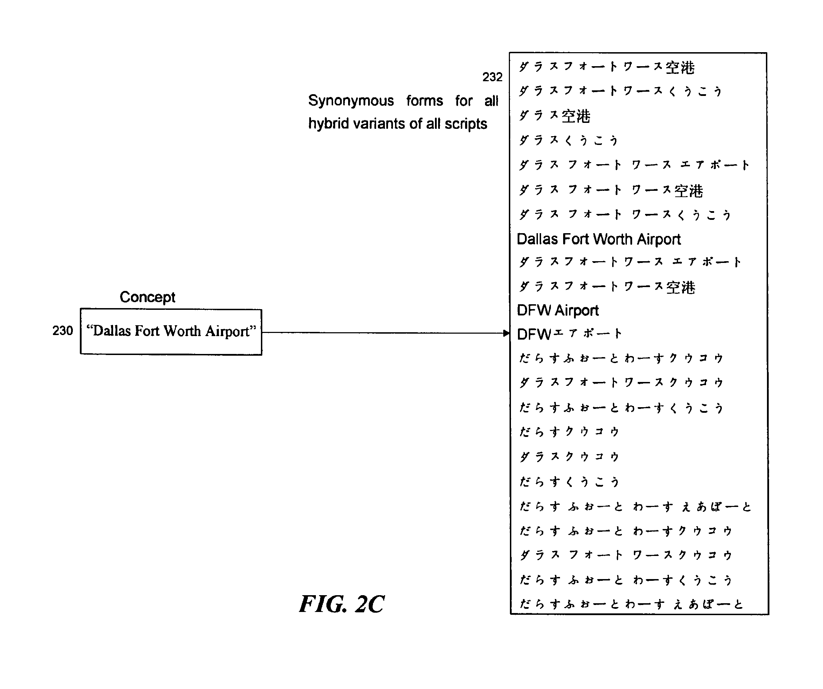

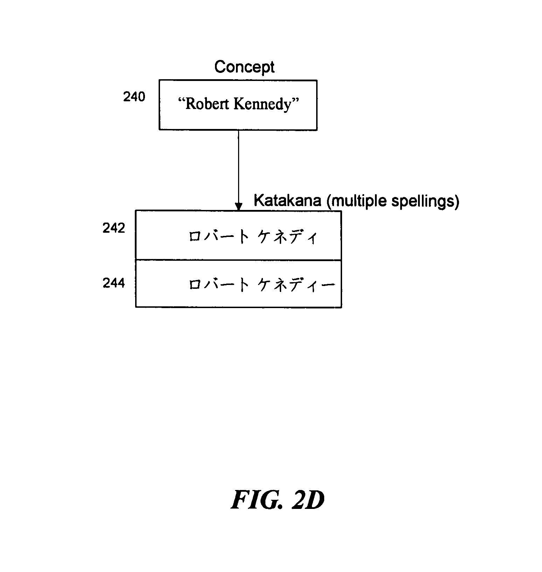

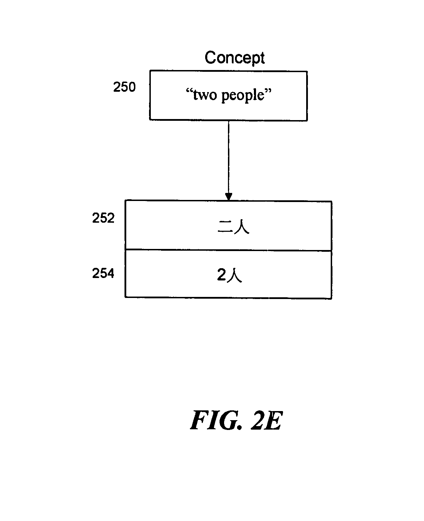

In the drawings, the same reference numbers identify identical or substantially similar elements or acts. To facilitate the discussion of any particular element or act, the most significant digit or digits in a reference number refer to the figure number in which that element is first introduced (e.g., element 204 is first introduced and discussed with respect to Figure 2).

### DETAILED DESCRIPTION

The invention will now be described with respect to various embodiments. The following description provides specific details for a thorough understanding of, and enabling description for, these embodiments of the invention. However, one skilled in the art will understand that the invention may be practiced without these details. In other instances, well-known structures and functions have not been shown or described in detail to avoid unnecessarily obscuring the description of the embodiments of the invention.

It is intended that the terminology used in the description presented be interpreted in its broadest reasonable manner, even though it is being used in conjunction with a detailed description of certain specific embodiments of the invention. Certain terms may even be emphasized below; however, any terminology intended to be interpreted in any restricted manner will be overtly and specifically defined as such in this Detailed Description section.

### I. Overview

A method and system for orthographic disambiguation and cross-orthographic searching in complex languages, such as the Japanese language, is provided, and may be referred to herein as "the complex language search facility" or "the facility." The facility may include orthographic disambiguation of each search query. In some embodiments, the facility disambiguates text-based Japanese search queries written in kanji, hiragana, and/or katakana, and to some extent romaji, and most combinations thereof. The facility may support orthographic disambiguation that works with common search operators such as the Boolean operators AND, OR, and NOT, which may also be identified as stopwords during segmentation. The facility may also support disambiguation of any combination of words or phrases that is written without any operators at all. Likewise, disambiguation works on search queries that do not contain any word boundaries, such as white spaces.

In some embodiments, the complex language search facility functions so that a result set returned for a given semantic concept written orthographically in any accepted form retrieves the same search result. While a portion of this description provides a detailed example of an implementation of the method and system for searching in the Japanese language, one skilled in the art will understand that implementations in other complex orthographic languages (e.g., Chinese, Korean, German, etc.) may be possible without departing from the scope of the invention.

As described in detail below, the complex language search facility may have applications in the context of searching for assets or other types of content that can be stored and represented, at least to some extent electronically. For example, the facility may be applied in almost any type of search environment, whether the environment is online or offline. Examples of such environments include searching for images in an image database, searching for products in an e-commerce retail setting, searching for documents in a document library, searching for words or items within a document, searching in the context of a free-text search engine, searching for terms to replace with synonyms in a word processing document, searching in the context of document archiving, and so on. The facility may also be portable, and is not limited for use within any specific computer application.

### II. System Architecture and Implementation

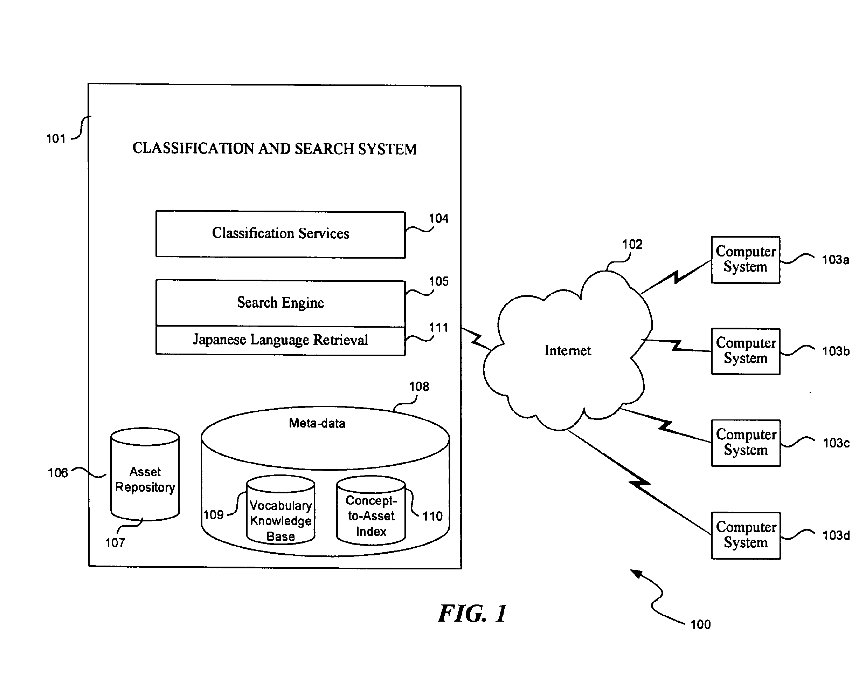

Figure 1 and the following discussion provide a brief, general description of a suitable environment in which the complex language search facility can be implemented. Although not required, aspects of the facility are described in the general context of computer-executable instructions, such as routines executed by a general-purpose computer (e.g., a server computer, wireless device, or personal/laptop computer). In addition, human intervention may occur with respect to one or more of these routines. Those skilled in the relevant art will appreciate that the invention can be practiced with other communication, data processing, or computer system configurations, including Internet appliances, hand-held devices (including personal digital assistants (PDAs)), wearable computers, all manner of cellular or mobile phones, embedded computers (including those coupled to vehicles), multi-processor systems, microprocessor-based or programmable consumer electronics, set-top boxes, network PCs, mini-computers, mainframe computers, and the like. Indeed, the terms "computer," "host," and "host computer" are generally used interchangeably and refer to any of the above devices and systems, as well as any data processor.

Aspects of the facility can be embodied in a special purpose computer or data processor that is specifically programmed, configured, or constructed to perform one or more of the computer-executable instructions explained in detail herein. Aspects of the facility can also be practiced in distributed computing environments where tasks or modules are performed by remote processing devices, which are linked through a communication network. In a distributed computing environment, program modules may be located in both local and remote memory storage devices.

Aspects of the facility may be stored or distributed on computer-readable media, including magnetically or optically readable computer disks, as microcode on semiconductor memory, nanotechnology memory, organic or optical memory, or other portable data storage media. Indeed, computer-implemented instructions, data structures, screen displays, and other data under aspects of the invention may be distributed over the Internet or over other networks (including wireless networks), on a propagated signal on a propagation medium (e.g., an electromagnetic wave(s), a sound wave, etc.) over a period of time, or may be provided on any analog or digital network (packet switched, circuit switched, or other scheme). Those skilled in the relevant art will recognize that portions of the facility reside on a server computer, while corresponding portions reside on a client computer, such as a mobile device.

Figure 1 is a block diagram that provides an example of an environment 100 in which the complex language search facility may be implemented. In this example, the environment 100 includes a classification and search system 101 (e.g., an image or media classification and search system) driven by a structured vocabulary. The classification and search system 101 is connected to a communication medium, for example, the Internet 102, which is in turn connected to one or more computer systems (103a-d). The classification and search system 101 includes a classification services component 104 that allows for the classification of assets (e.g., images, documents, item descriptions, or other units of content). The classification and search system 101 may also include a search engine 105 and one or more data repositories 106. For example, the data repositories 106 may include an asset repository 107 and a meta-data repository 108 that may comprise a vocabulary knowledge base 109 and a concept-to-asset index 110. While shown as a particular set of repositories in a particular configuration, it is possible for the one or more data repositories 106 to exist in other combinations.

The search engine 105 may provide routines that, in response to a user search query, locate and retrieve one or more assets from the asset repository 107 using information associated with the vocabulary knowledge base 109 and the concept-to-asset index 110. The search engine 105 is configured to include a complex language retrieval system 111, which allows the search engine 109 to retrieve assets from the asset repository 107, even when search queries contain search terms from complex languages (e.g. Japanese).

The asset repository 107 stores information for individual assets and/or collections of assets, while the meta-data repository 108 stores information that links each asset to one or more concepts. For example, a photograph of a girl running on a beach may be linked to the concepts of "girl, "dog," and "beach." In some embodiments, the classification services component 104 provides routines to classify assets stored in the asset repository 107 by associating each asset (and/or collection of assets) with concepts from the vocabulary knowledge base 109. These classification routines may rely on user interaction or may be fully automated. Once the assets have been classified in this way, the concept-to-asset index 110 is generated, which associates each concept from the vocabulary knowledge base 109 with one or more assets.

The vocabulary knowledge base 109 may comprise a knowledge base of keywords that can be mapped to search terms from a user search query. For some languages (e.g., Japanese), the vocabulary knowledge base 109 contains several groupings of keywords, so that keywords having possible common meanings are grouped and associated with a common concept. For example, the vocabulary knowledge base 109 may include a separate data structure for each recognized concept, with each concept data structure including information associated with one or more keywords. In addition, each concept (and its associated keywords) may be associated with a unique keyword ID.

In some embodiments, the concepts within the vocabulary knowledge base 109 may be structured hierarchically, such that concepts located farther down in the hierarchy provide more specificity than concepts located higher up in the hierarchy. For example, as is described in more detail in U.S. Patent No. 6,735,583, concepts (referred to as "vocabulary units" or "terms" in the above-referenced patent) within the vocabulary knowledge base 109 may be arranged in a tree or n-plex structure with subordinated concepts being logical subsets of the concepts to which they are subordinated.

In the case of the Japanese language, the vocabulary knowledge base 109 may comprise a knowledge base of concepts and keywords that are localized into Japanese following linguistic rules of written Japanese to allow for orthographic disambiguation and searching using Japanese. As illustrated by way of example in Figures 2A-2E, in some embodiments, a set of linguistic rules for implementing the vocabulary knowledge base 109 for searching in the Japanese language is as follows:
- **Common Main Form:** Application of this rule includes identifying a main orthographic form for each semantic concept based on the most commonly used spelling (which may be associated with a keyword identification number in the vocabulary knowledge base 109). In the case of Japanese, this main form is probably kanji or possibly katakana. This form becomes the keyword, as shown in block 204 of Figure 2A. In less frequent cases where the hiragana form is more popular than the kanji, the hiragana form may be used as the keyword instead of the kanji or katakana form. For example, in Figure 2A, the concept represented by the English word "freedom" 200 is written most commonly using the kanji orthographic form, shown in block 206.
- **Common Script Variants - Hiragana:** In this case of Japanese, application of this rule includes identifying, for each semantic concept, forms for all hiragana variants (that have not already been identified as a keyword). These variants are added to the vocabulary knowledge base 109 as synonyms. For example, the concept represented by the English word "freedom" 200 can be written using the hiragana variant shown in block 208. The variant of block 208 is, thus, added to the vocabulary knowledge base 109 as a recognized variant for the concept of "freedom" and linked to the same keyword identification number 204 as the main form (e.g., a kanji variant 206). Thus, when creating a search query, if a system user types the hiragana variant of block 208 or the kanji variant of block 206, the facility recognizes either of these search queries as being linked to the same concept 200, and retrieves the same search results (e.g., documents, images, etc.) in either case.
- **Common Script Variants - Katakana:** Application of this rule includes, for each written kanji form, adding forms for all katakana variants (that have not already been identified as a keyword) to the vocabulary knowledge base 109 as synonyms. For example, the concept represented by the English word "freedom" 200 can be written using the katakana variant shown in block 210 of Figure 2A. Accordingly, this variant, like the hiragana variant 208, is added to the vocabulary knowledge base 109 as a recognized variant for the concept of "freedom" and linked to the same keyword identification number 204 as the kanji variant 206. Thus, when creating a search query, if a user types the hiragana variant of block 208, the katakana variant of block 210, or the kanji variant of block 206, the facility retrieves the same search results in every case.

Table 202 in Figure 2A represents various rules that can be applied to create/update the vocabulary knowledge base 109, with the three rules being applied above highlighted in bold text. Once the rules of table 202 have been applied, a relationship 212 between the concept of freedom and the keyword ID may be implemented in the vocabulary knowledge base (e.g., the keyword ID may function as a primary key in a database to represent the concept as it relates to its main form and all synonyms). Accordingly, the relationship 212 may be used as a tool during searching to retrieve assets associated with keywords, which are linked to synonyms, and which in turn are linked to assets. Some of the rules in table 202 that are not shown in bold text may not be particularly relevant when using the example of "freedom" as a semantic concept. However, such rules may be applicable with respect to other semantic concepts, as described with respect to the following additional rules and examples, which are illustrated in further detail with respect to Figures 2B-2E.
- **Grammatical Forms:** Application of this rule may include, for each semantic concept, adding forms for all okurigana variants (kanji + hiragana grammatical ending) to the vocabulary knowledge base 109 as synonyms. (In the Japanese language, okurigana variants, which are common among verbs in particular, are hiragana endings used to modify verb tense.) For example, the concept associated with the English word "drinking" (block 220 of Figure 2B) is most commonly written using the okurigana variant, which is shown in block 222. This form is, thus, set as the main form/keyword. In the illustrated example, the first character of the okurigana variant 222 is kanji and the last character is hiragana.
   For the "drinking" example 220, the all-hiragana variant is shown in block 224 and the all-katakana variant is shown in block 226. Both of these forms are set as synonyms.
- **Other Script Variants:** Application of this rule may include, for each semantic concept, adding forms for all hybrid variants of all scripts (including romaji) to the vocabulary knowledge base 109 as synonyms. For example, as shown in Figure 2C, some concepts, such as "Dallas Fort Worth Airport" (block 230), are rendered using any combination of the aforementioned orthographic scripts, shown as recognized variant forms in block 232.
- **Phonetic Variants:** Application of this rule may include, for each semantic concept, adding forms for all phonetic substitutes (where the same concept has multiple alternative phonetic spellings) to the vocabulary knowledge base 109 as keywords. For example, as shown in Figure 2D, the semantic concept for "Robert Kennedy" (block 240) can be written using multiple alternative katakana phonetic spellings (all are correct), shown in blocks 242 and 244.
- **Proper Noun Variants:** Application of this rule may include, for each semantic concept of proper nouns, which are people or place names, adding the English and/or native spelling variants to the vocabulary knowledge base 109 as keywords. For example, "Robert Kennedy" might retrieve the same search results as Robert Kennedy written in katakana (block 242 or 244).
- **Numeral Variants:** Application of this rule may include, for each semantic concept containing numerals, adding forms for all Arabic numerals and katakana variants to the vocabulary knowledge base 109 as keywords. More specifically, numbers can be written in various orthographic forms (kanji, hiragana, katakana), which may include Arabic numerals in the variants. For example, the concept of "two people" (block 250 of Figure 2E) may be portrayed with either of the variants shown in blocks 252 and 254.
- **Scientific Names:** Application of this rule may include, for each semantic concept of plants and animals, adding the scientific name (using Latin script) to the vocabulary knowledge base 109 as a synonym.
- **Culturally Relevant Synonyms:** Application of this rule may include, for each semantic concept, adding only those synonyms that are culturally appropriate to the given Japanese concept to the vocabulary knowledge base 109. For example, for any given semantic concept, an appropriate synonym in one culture may not be an appropriate synonym in another culture. This ensures that only culturally relevant semantic concepts are displayed during searches. For example, the semantic concept of "freedom" exists in Japan as it does in the United States. However, the "idea" or imagery that represents that concept may be different. Images of the Statue of Liberty, for example, may be associated with the keyword "freedom" on a web site in the United States. Those same images, however, may not best represent the concept of "freedom" for other cultures.

Once implemented (e.g., using any combination of the above rules - as well as possibly other rules), the vocabulary knowledge base 109 of Figure 1 allows the facility to match Japanese orthographic variants provided in user search queries to sets of assets. While the above rules are specific to facilitate searching in Japanese, similar rules may be applied to facilitate searching in other languages.

Additional details relating to a representative environment in which the complex language search facility can be implemented and used is described in detail in commonly assigned U.S. Patent No. 6,735,583, "Method and System for Classifying and Locating Media Content." However, the method and system for searching is not limited to use in such a system, and may be applied in almost any system where content searching applies, including the Internet, product or item catalogs, information repositories, etc.

### III. System Flows

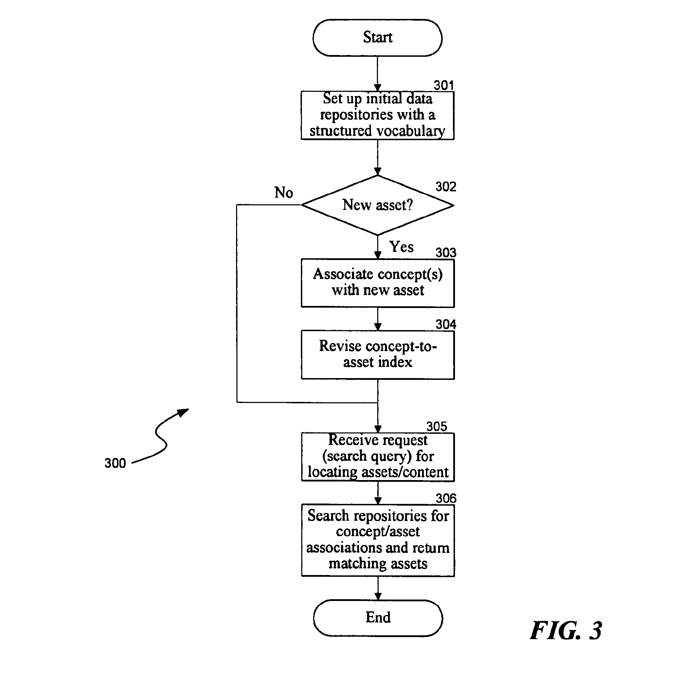

Figures 3 through 8 are representative flow diagrams that show processes that occur within the system of Figure 1. These flow diagrams do not show all functions or exchanges of data but, instead, provide an understanding of commands and data exchanged under the facility. Those skilled in the relevant art will recognize that some functions or exchanges of commands and data may be repeated, varied, omitted, or supplemented, and other aspects not shown may be readily implemented. For example, while not described in detail, a message containing data may be transmitted through a message queue, over HTTP, etc.

The flow represented in Figure 3 is a high-level flow showing a combined overview of various processes performed by the facility in some embodiments. Some of the individual processes or subtransactions are described in more detail in the Figures that follow. In the context of the components described with respect to Figure 1, blocks 301 through 304 demonstrate how the vocabulary knowledge base 109, the meta-data repository 108, and the concept-to-asset index 110 are created and updated (e.g., when new assets are added).

At block 301, the facility creates or provides an initial structured vocabulary that classifies semantic concepts according to a hierarchy, provides an association of keywords for each semantic concept (e.g., using the rules described above), and stores this information in the vocabulary knowledge base 109. Likewise, relationships identified between individual assets and concepts are identified and indications of these relationships are stored in the concept-to-asset index 110. Similarly, other types of meta-data are associated with assets and stored in the meta-data repository 108.

At decision block 302, if there are new assets to be added to the facility, the routine 300 continues at block 303, else the routine continues at block 305. At block 303 the facility associates the new assets with specific concepts (which may involve user intervention). This may include updating the vocabulary knowledge base 109. As described above with respect to Figure 1, the meta-data repository may use keyword identifiers instead of the concepts themselves to preserve language independence. This process is described in more detail in U.S. Patent No. 6,735,583, which uses the words "term" and "term identifier" in place of the words "concept" and "keyword identifier," respectively.

At block 304, the facility assembles the concept-to-asset index 110, which allows the search engine 105 to locate assets through the keyword identifiers contained in the concept-to-asset index 110. Thus, the concept-to-asset index 110 serves as a "reverse" index of assets, arranged by associating each concept (or corresponding keyword identifier) with one or more assets.

In some embodiments, the facility may perform blocks 301-304 (or similar actions) independently of each other. The facility may execute these processes repeatedly and concurrently, as changes to the structured vocabulary, asset pool, etc., are desired. For example, as concepts derived from assets are added to the structured vocabulary, the facility may then use these concepts to "fine-tune" the complex language vocabulary for greater efficiency.

At block 305, the facility receives a request (e.g., a user provided search query) for desired assets. At block 306, the search engine 105 normalizes the received search query to convert its characters to standard form(s) used by the search engine 105, identifies concepts for the search query by searching for matches in the data repositories 107, 108, 109, and 110, and locates assets that are referred to by any keyword identifiers that correspond to the identified concepts. In a hierarchically structured vocabulary, the search engine 105 may also locate assets that are referred to by subordinate keyword identifiers according to their ranking in the vocabulary. The located assets are optionally displayed, for example, in a list or as electronic representations.

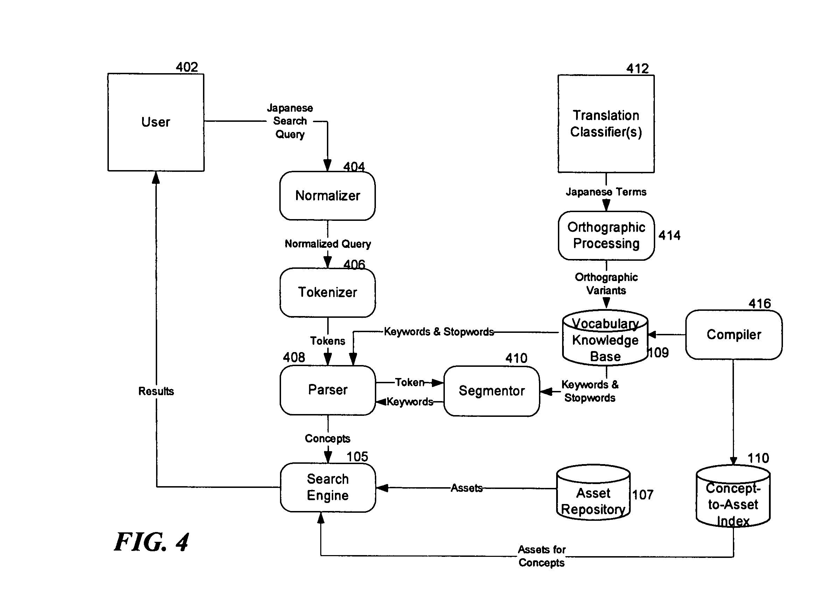

Several of the processes/routines described generally with respect to Figure 3 are described below in more detail with respect to Figures 4-8, and may be applied, in particular, to complex languages, such as Japanese. For example, referring to Figure 4, after a search query is entered (e.g., by a user 402), the facility performs normalization using a normalizer component 404. During normalization, the facility may convert the search query text to a standard form. For example, the facility may standardize any characters having multiple representations in an input character encoding that should be treated as identical. A user search query encoded in, for example, ISO 8859-1 (Latin 1) may automatically be normalized by the system and encoded as, for example, USC-002 (Unicode) so that the system thereafter will know how to interpret each representation. In some embodiments, the normalization may separate search tokens (e.g., predefined character groups including one or more characters) with spaces, convert haff-width katakana queries to full-width katakana queries, etc. The normalization adheres to rules that specify which actions the system should implement, and these rules may be unique to a computer application.

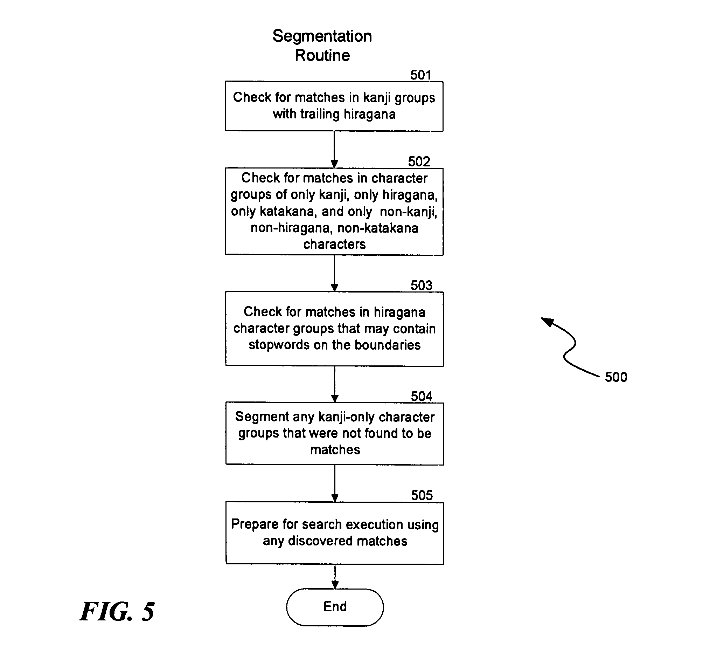

The facility may then proceed to perform tokenization using a tokenizer 406. During tokenization, the facility may break up the search query so that vocabulary lookups can be performed on potential terms from the user search query. A parser component 408 then checks the tokens for matches in the Japanese vocabulary database. If no match is found for a token, the facility undergoes a segmentation subroutine performed by a segmentor component 410. The segmentation process is described in more detail with respect to Figures 5-8.

After segmentation, the search engine 105 may execute a search using any keywords found during parsing and segmentation by looking up results in the vocabulary knowledge base linking concepts to assets from the asset repository 107. For example, the facility may send the returned keyword identifiers to the asset repository 107 for retrieval of assets classified with the matching concepts. The search engine 105 may then return a result set to the user 402. The search engine 105 may also return a disambiguation request to the user, which is described in more detail in U.S. Patent No. 6,735,583, referenced above.

Figure 4 also illustrates examples of components that relate to the creation of the meta-data repository (not shown in this figure), including the vocabulary knowledge base 109 and the concept-to-asset index 110 of Figure 1. For example, one or more translators or classifiers 412 may facilitate orthographic processing 414 of complex language keywords (e.g., keywords represented in Japanese) by applying the rules described with respect to Figures 2A-2E above to create the vocabulary knowledge base. Likewise, Figure 4 illustrates the flow of data used in creating/updating components such as the concept-to-asset-index 110. A compiler component 416 may be involved in creating/updating both the vocabulary knowledge base and the concept-to-asset index.

Referring to Figure 5, the facility may perform a segmentation routine 500 that allows certain user search queries to undergo further segmentation when the initial token matching is not successful. Segmentation may include the process of looking for keywords and stopwords within a single token by using both linguistic rules and contrived rules. For example, keywords and synonyms include any variants tied with concepts in the hierarchical knowledge base 109 of Figure 1. Stopwords include a predetermined set of words that facility recognizes, but that are not keywords. For example, stopwords may include prepositions and other terms (e.g., and, the, or, etc.) When encountering stopwords, the facility may simply ignore and remove them from a search query. On the other hand, other terms such as Boolean values may invoke particular actions.

Any tokens that have not been identified as either keywords or stopwords during parsing may be candidates for segmentation. The segmentation routine is especially useful in the case of languages such as Japanese and German, where spaces are not always present between words and other autonomous language units. In general, the segmentation routine involves treating a given query string as a single token, examining that token to determine if it represents a single keyword, and if not, breaking the token up into smaller tokens by identifying keywords or stopwords within that token. The routine 500 of Figure 5 provides an example of this process that is specific to the Japanese language. However, similar routines may be performed on other complex languages.

Blocks 501-505 describe the process for a single token. At block 501, the routine 500 checks for matches in kanji groups with trailing hiragana (e.g., by doing a lookup in the vocabulary knowledge base and/or using Unicode Character Code values to locate adjacent groups of related scripts (e.g., kanji, hiragana, katakana, other, etc.)). At block 502, the routine 500 checks for matches in character groups of only kanji, only hiragana, only katakana, and only non-kanji, non-hiragana, non-katakana characters. At block 503, the routine 500 checks for matches in hiragana character groups that may contain stopwords (such as the Japanese kanji for the concept "and" and other common or general terms such prepositions and articles that are not used as keywords during searching) on their boundaries.

At block 504, the routine 500 attempts to segment any kanji-only character groups that were not found to be matches. For example, the search string WXYZ may be segmented as: WXY, XYZ, WX, XY, YZ, W, X, Y, Z. If at block 504, a substring is found as a match, the routine 500 continues to check remaining substrings for matches until all substrings are checked. In some embodiments, the routine 500 then replaces the original token with the list of tokens (preserving character input order) found by segmentation including tokens containing characters not identified as keywords in blocks 501-504. At block 505, after all tokens have been segmented, the facility is then ready to execute a search using any keywords found during parsing and segmentation by looking up results in the vocabulary database linking keywords to assets.

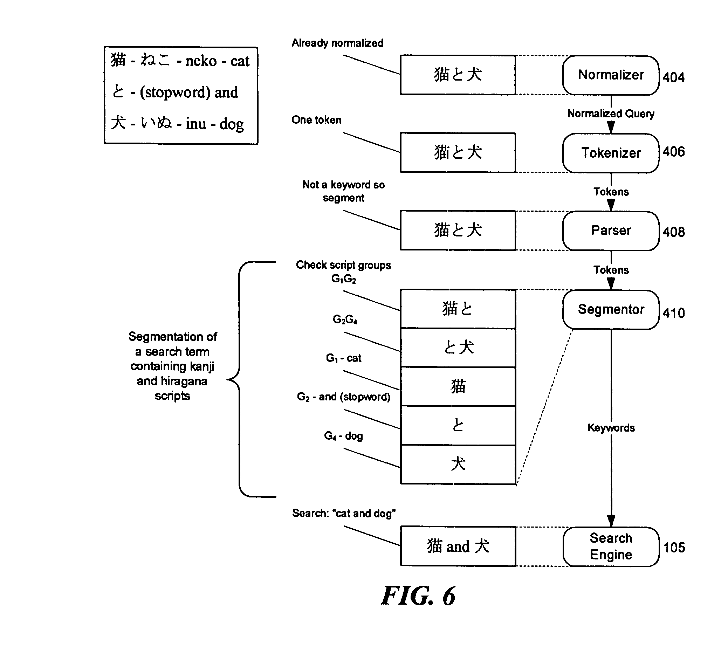

Figures 6-8, which are for the most part self-explanatory, provide specific examples of segmentation processes. More specifically, Figure 6 provides an example of segmentation of a search query (e.g., containing the concept of "cat and dog") containing both kanji and hiragana scripts. In the example of Figure 6, the facility checks combinations of adjacent script groups (by lookup in the Japanese vocabulary) to determine the existence of keywords or stopwords. For example, for script groups G₁G₂G₃G₄, the facility checks: G₁G₂G₃, G₂G₃G₄, G₁G₂, G₂G₃, G₃G₄, G₁, G₂, G₃, G₄.

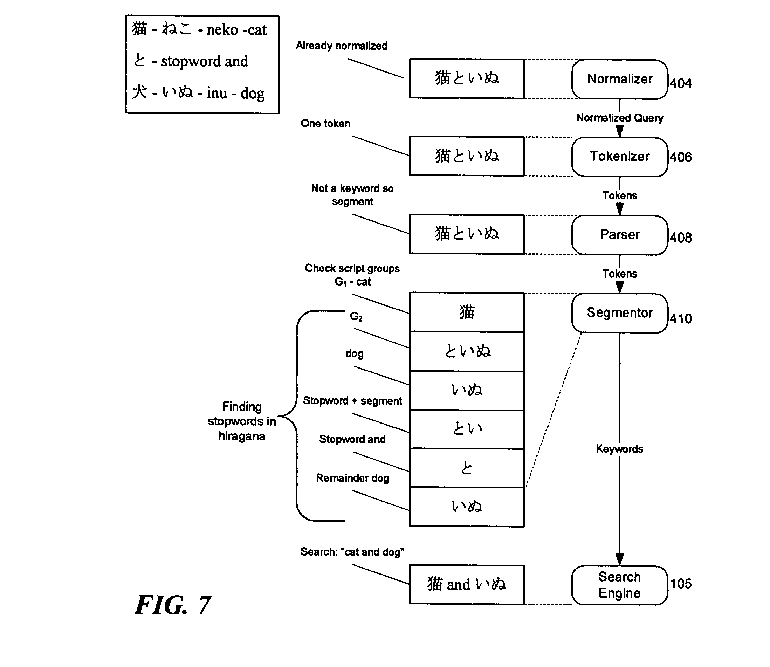

Figure 7 provides an example of finding stopwords (e.g., "and") in hiragana. In the example of Figure 7, the facility checks for stopwords on the ends of hiragana character groups by performing a lookup in a stopword list. If a stopword is found, the facility checks the remaining portion of the character group as a keyword. More generally, for hiragana characters H₁H₂H₃H₄, the facility checks: H₂H₃H₄, H₃H₄, H₄, H₁H₂H₃, H₁H₂, H₁. Then, if a stopword is found, the facility determines if the remaining portion (e.g., for H₁H₂H₃, H₄ is the remaining portion) is a keyword.

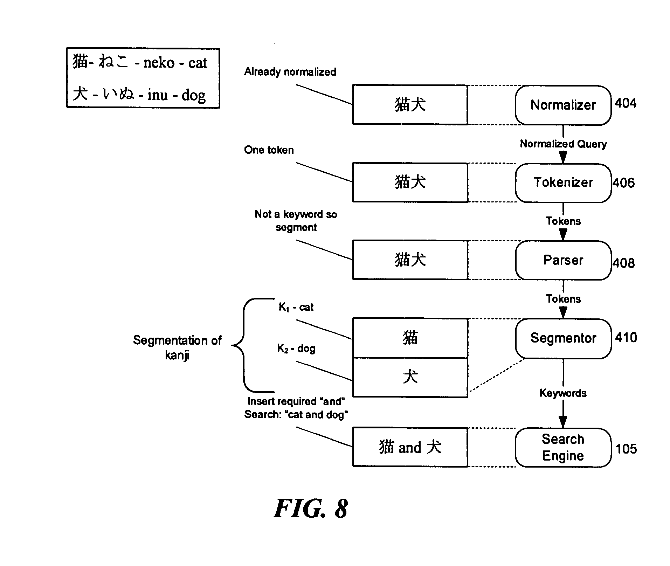

Figure 8 provides an example of segmentation of kanji. In the example of Figure 8, the facility checks for keywords in kanji character groups. More generally, for kanji string K₁K₂K₃K₄, the facility checks: K₁K₂K₃, K₂K₃K₄, K₁K₂, K₂K₃, K₃K₄, K₁, K₂, K₃, K₄. If a substring is identified as a keyword, the facility continues to check remaining substrings.

### IV. Conclusion

Unless the context clearly requires otherwise, throughout the description and the claims, the words "comprise," "comprising," and the like are to be construed in an inclusive sense as opposed to an exclusive or exhaustive sense; that is to say, in the sense of "including, but not limited to." Additionally, the words "herein," "above," "below," and words of similar import, when used in this application, shall refer to this application as a whole and not to any particular portions of this application. When the claims use the word "or" in reference to a list of two or more items, that word covers all of the following interpretations of the word: any of the items in the list, all of the items in the list, and any combination of the items in the list.

The above detailed description of embodiments of the invention is not intended to be exhaustive or to limit the invention to the precise form disclosed above. While specific embodiments of, and examples for, the invention are described above for illustrative purposes, various equivalent modifications are possible within the scope of the invention, as those skilled in the relevant art will recognize. For example, while processes or blocks are presented in a given order, alternative embodiments may perform routines having steps, or employ systems having blocks, in a different order, and some processes or blocks may be deleted, moved, added, subdivided, combined, and/or modified. Each of these processes or blocks may be implemented in a variety of different ways.

Also, while processes or blocks are at times shown as being performed in series, these processes or blocks may instead be performed in parallel, or may be performed at different times. Where the context permits, words in the above Detailed Description using the singular or plural number may also include the plural or singular number, respectively.

The teachings of the invention provided herein can be applied to other systems, not necessarily the system described herein. The elements and acts of the various embodiments described above can be combined to provide further embodiments.

All of the above patents and applications and other references, including any that may be listed in accompanying filing papers, are incorporated herein by reference. Aspects of the invention can be modified, if necessary, to employ the systems, functions, and concepts of the various references described above to provide yet further embodiments of the invention.

These and other changes can be made to the invention in light of the above Detailed Description. While the above description details certain embodiments of the invention and describes the best mode contemplated, no matter how detailed the above appears in text, the invention can be practiced in many ways. Details of the content sharing system and spam control and privacy management techniques may vary considerably in their implementation details, while still be encompassed by the invention disclosed herein. As noted above, particular terminology used when describing certain features or aspects of the invention should not be taken to imply that the terminology is being re-defined herein to be restricted to any specific characteristics, features, or aspects of the invention with which that terminology is associated. In general, the terms used in the following claims should not be construed to limit the invention to the specific embodiments disclosed in the specification, unless the above Detailed Description section explicitly defines such terms. Accordingly, the actual scope of the invention encompasses not only the disclosed embodiments, but also all equivalent ways of practicing or implementing the invention under the claims.

While certain aspects of the invention are presented below in certain claim forms, the inventors contemplate the various aspects of the invention in any number of claim forms. For example, while only one aspect of the invention is recited as embodied in a computer-readable medium, other aspects may likewise be embodied in a computer-readable medium. Accordingly, the inventors reserve the right to add additional claims after filing the application to pursue such additional claim forms for other aspects of the invention.

## Claims

1. A system for searching content requested using a text-based query including one or more scripts or orthographic forms associated with Japanese, the system comprising:
a hierarchically structured vocabulary knowledge base for storing vocabulary information associated with the one or more scripts or orthographic forms, wherein the vocabulary knowledge base is generated by a method comprising:
assigning an identifier to a semantic concept;
identifying a main orthographic form for the semantic concept,
wherein the main orthographic form is based on kanji script, katakana script, hiragana script, or any combination of kanji script, katakana script, and hiragana script;
for at least one of the one or more scripts or orthographic forms, associating at least one synonymous orthographic form with the semantic concept, wherein the synonymous orthographic form is at least partially distinct from the main orthographic form, and wherein the at least one synonymous orthographic form includes any one or more of:
kanji script,
katakana script,
hiragana script,
okurigana variant,
romaji written form,
phonetic variants associated with one or more of kanji script, katakana script, hiragana script, okurigana variant, and romaji written form, and/or
hybrid variants associated with one or more of kanji script, katakana script, hiragana script, okurigana variant, and romaji written form;
storing the identifier, the main orthographic form, and the at least one synonymous orthographic form in a data storage component associated with the system; and
repeating the assigning, the identifying, the associating, and the storing for additional semantic concepts;
an asset repository for storing information associated with searchable assets;
a classification component for classifying the searchable assets in the asset repository to facilitate matching between the searchable assets and the vocabulary information, wherein the matching is based, at least in part, on identifiers assigned to semantic concepts included in the vocabulary knowledge base; and
a search engine for receiving and executing queries for the searchable assets.

2. The system of claim 1 wherein the search engine performs a method comprising:
receiving a search query comprising a textual expression represented using one or more characters in at least one of the one or more scripts or orthographic forms;
normalizing the received search query, wherein the normalizing includes converting any characters with multiple possible representations to a standardized form;
tokenizing the normalized search query, wherein the tokenizing includes separating the textual expression into one or more tokens;
based on a vocabulary knowledge base, determining a match for each token of the tokenized search query;
for each token where the determining of a match is not successful, segmenting the token, wherein the segmenting includes performing additional matching on identified segments of the token;
executing the search using a set of tokens for which a match has been determined; and
displaying a result set from the executed search.

3. The system of claim 1 wherein the method for generating the vocabulary knowledge base further comprises any one or more of the following:
associating one main common form with the semantic concept;
associating one or more script-based forms with the semantic concept;
associating one or more grammatically-based forms with the semantic concept;
associating one or more phonetic forms with the semantic concept;
associating one or more synonymous forms for any proper nouns associated with the semantic concept;
associating one or more synonymous forms for any Arabic numerals and katakana with the semantic concept;
associating a scientific name written using Latin letters with the semantic concept;
associating one or more synonymous forms that are culturally appropriate with the semantic concept;
screening synonymous forms that are not culturally appropriate; and
screening synonymous forms that are not culturally relevant.

4. In a computer system, a method for searching for content identified using text and symbols of a language having multiple written variants of at least some semantic concepts, the method comprising:
receiving a search query comprising a textual expression represented using one or more characters in at least one script or orthographic form associated with the language;
normalizing the received search query, wherein the normalizing includes converting any characters with multiple possible representations to a standardized form;
tokenizing the normalized search query, wherein the tokenizing includes separating the textual expression into one or more tokens;
based on contents of a vocabulary knowledge base, determining a match for each token of the tokenized search query;
for each token where the determining of a match is not successful, segmenting the token, wherein the segmenting includes performing additional matching on identified segments of the token;
executing the search using a set of tokens for which a match has been determined; and
displaying a result set from the executed search.

5. The method of claim 4 wherein the language is Japanese.

6. The method of claim 4 wherein the language is a language other than Japanese.

7. The method of claim 4 wherein the segmentation includes one or more of:
identifying the token as including a kanji group with trailing hiragana and checking for matches in the vocabulary knowledge base;
identifying the token as including only kanji, only hiragana, or only katakana and checking for matches in the vocabulary knowledge base;
identifying the token as including only non-kanji, only non-hiragana, or only non-katakana and checking for matches in the vocabulary knowledge base;
identifying the token as including a hiragana character group that contains one or more stopwords; and
segmenting any kanji-only character groups that are not successfully matched.

8. A system for searching for content identified using text and symbols of a complex language associated with multiple written forms, the system comprising:
a vocabulary knowledge base for storing vocabulary information associated with the complex language, wherein the vocabulary knowledge base is generated or updated by a repeatable method comprising:
assigning an identifier to a semantic concept;
identifying a main written form for the semantic concept, wherein the main written form is based on at least one of the multiple written forms;
for at least one of the multiple written forms associated with the complex language, associating at least one synonymous written form with the semantic concept, wherein the synonymous written form is at least partially distinct from the main written form; and
storing the identifier, the main written form, and the at least one synonymous written form in a data storage component associated with the system;
an asset repository for storing information associated with searchable assets; and
a search engine for receiving and executing queries for the searchable assets, wherein the execution is based, at least in part, on the contents of the vocabulary knowledge base.

9. The system of claim 8, further comprising, a classification component for classifying the searchable assets in the asset repository to facilitate matching between the searchable assets and the vocabulary information.

10. The system of claim 8 wherein the asset repository stores data associated with images.

11. The system of claim 8 wherein the asset repository stores data associated with documents.

12. The system of claim 8 wherein the vocabulary knowledge base is a subcomponent of a meta-data repository, and wherein the meta-data repository further comprises a concept-to-asset repository, for storing information associated with relationships between concepts from the vocabulary database and assets from the asset repository.

13. The system of claim 8 wherein the vocabulary knowledge base is structured hierarchically, such that concepts located farther down in the hierarchy provide more specificity than concepts located higher up in the hierarchy.

14. The system of claim 8 wherein the identified main written form is tagged as a keyword for searching.

15. The system of claim 8 wherein the language is Japanese, and
wherein the multiple written forms include, kanji script, katakana script and hiragana script, okurigana variant, and romaji written form.

16. A method for generating or updating a vocabulary repository used in executing queries for retrieving content, wherein the queries are provided in a complex language associated with multiple written forms, the method comprising:
identifying a main form for a semantic concept, wherein the main form is based on at least one of the multiple written forms;
assigning an identifier to a semantic concept, wherein the assigned identifier is associated with at least the main form;
associating at least one synonymous variant with the semantic concept,
wherein the at least one synonymous written variant is at least partially distinct from the main form; and
storing the identifier, the main form, and the at least one synonymous variant in a data storage component accessible to a search engine configured to search for assets when provided with search queries in the complex language.

17. The method of claim 16, further comprising repeating the assigning, the identifying, the associating, and the storing for additional semantic concepts.

18. The method of claim 16, wherein identifying a main form for a semantic concept and associating at least one synonymous variant with the semantic concept includes:
associating one or more script based forms with the semantic concept;
associating one or more grammatically based forms with the semantic concept;
associating one or more phonetic forms with the semantic concept;
associating one or more synonymous forms for any proper nouns associated with the semantic concept;
associating one or more synonymous forms for any Arabic numerals and katakana with the semantic concept;
associating a scientific name with the semantic concept using Latin characters;
associating one or more synonymous forms that are culturally appropriate;
screening synonymous forms that are not culturally appropriate; and
screening synonymous forms that are not culturally relevant.

19. A computer-readable medium containing a data structure associated with a semantic concept that is representable in a complex language, the data structure comprising:
identifier information associated with the semantic concept;
information identifying a main textual form for the semantic concept,
wherein the main textual form is based on a first script type associated with the complex language; and
information associating at least one synonymous textual form with the semantic concept, wherein the synonymous textual form is based on a second script type associated with the complex language,
wherein the second script type is at least partially distinct from the first script type, and
wherein the data structure is configured for facilitating matching assets with search queries based on the complex language.

20. The computer-readable medium of claim 19 wherein the computer-readable medium is a logical node in a computer network receiving the contents.

21. The computer-readable medium of claim 19 wherein the computer-readable medium is a computer-readable disk.

22. The computer-readable medium of claim 19 wherein the computer-readable medium is a memory of a computer system.

23. A computer-implemented method for executing a search query, the method comprising:
receiving a search query including a textual expression, wherein the textual expression is written in a language that at least occasionally lacks discrete boundaries between words or autonomous language units;
determining whether the textual expression comprises a keyword or synonym associated with a structured vocabulary knowledge base for storing vocabulary information associated a language having multiple orthographic forms or scripts; and
if the textual expression does not comprise a keyword or synonym associated with a structured vocabulary knowledge base, performing segmentation on the textual expression, wherein the segmentation includes systematically splitting the textual expression into two or more segments, and identifying at least one keyword from the vocabulary knowledge based on the textual expression and the two or more segments.

24. The method of claim 23 wherein the systematic splitting includes identifying predetermined stopwords that are not keywords, wherein at least some of the predetermined stopwords are prepositions.

25. The method of claim 23 wherein the systematic splitting includes splitting the textual expression into the longest segments possible in an effort to preserve the intended meaning of the textual expression.

26. The method of claim 23 wherein the systematic splitting includes an application of both linguistic rules and contrived rules.

27. The method of claim 23 wherein the systematic splitting includes identifying predetermined stopwords that are not keywords, wherein at least some of the predetermined stopwords represent Boolean values used in executing the search query.

28. The method of claim 23 wherein the language is Japanese, and
wherein determining whether the textual expression in its entirety comprises a keyword or synonym associated with the structured vocabulary knowledge base includes checking for matches in kanji groups with trailing hiragana.

29. The method of claim 23 wherein the language is Japanese, and
wherein determining whether the textual expression in its entirety comprises a keyword or synonym associated with the structured vocabulary knowledge base includes checking for matches in character groups of only kanji, only hiragana, only katakana, and only non-kanji non-hiragana non-katakana characters.

30. The method of claim 23 wherein the systematic splitting includes segmenting a textual expression WXYZ as: WXY, XYZ, WX, XY, YZ, W, X, Y, Z,
wherein W, X, Y, and Z each represent a character or autonomous grouping of characters associated with the language.

31. The method of claim 23 wherein the search query is received via a network connection.

32. A structured vocabulary stored in a computer memory usable with a computer system, comprising:
multiple digital media assets; and
multiple keywords, wherein the keywords are ordered in the structured vocabulary according to inherent relationships between the terms, such that at least some of the digital media assets are associated with a keyword and at least one variant form of the keyword, and
wherein each digital media asset is associated with an identifier and can be identified by matching a requested term with a keyword or at least one variant form of the keyword associated with one of the identifiers.

33. The structured vocabulary of claim 32 wherein the structured vocabulary is portable and not limited for use within any specific computer application.

34. A method in a first computer system for retrieving a media content unit from a second computer system having a plurality of media content units that have been classified according to keyword terms of a structured vocabulary, comprising:
sending a request for a media content unit, the request specifying a search term; and
receiving an indication of at least one media content unit that corresponds to the specified search term, wherein the search term is located within the structured vocabulary and is used to determine at least one media content unit that corresponds to the search term, and wherein orthographic variations of the search term are automatically provided to assist in determining the at least one media content unit that corresponds to the search term.

35. The method of claim 34 wherein the keyword terms of the structured vocabulary are ordered such that the relationship of each term to each other term is inherent in the ordering.

36. A computer-implemented method to search for data in a database, the method comprising:
receiving a search request, wherein the request includes a search query term;
automatically determine any orthographic variations of the search query term; and
conducting a search of the database based on the search query term and any orthographic variations of the search query term.

37. The method of claim 36 wherein the search request comprises at least one orthographic form of Japanese text.

38. The method of claim 36 wherein the search request comprises at least one orthographic form of Korean text.

39. The method of claim 36 wherein the search request comprises at least one orthographic form of Chinese text.

40. The method of claim 36 wherein conducting the search occurs in the context of searching for images cataloged in an image repository.

41. The method of claim 36 wherein conducting the search occurs in the context of searching for products in an e-commerce or Internet retail setting.

42. The method of claim 36 wherein conducting the search occurs in the context of searching for words or items within a document.

43. The method of claim 36 wherein conducting the search occurs in the context of a free-text search engine.

44. The method of claim 36 wherein conducting the search occurs in the context of retrieving documents from a document archive.
